(19) **Europäisches Patentamt / European Patent Office / Office européen des brevets**

(11) **EP 4 586 213 A1**

(12) **DEMANDE DE BREVET EUROPEEN**

(43) Date de publication:
**16.07.2025 Bulletin 2025/29**

(21) Numéro de dépôt: **24199926.7**

(22) Date de dépôt: **12.09.2024**

(51) Classification Internationale des Brevets (IPC):
**G06V 10/764** (2022.01)   **G06V 10/82** (2022.01)
**G06V 40/12** (2022.01)   **G06V 40/10** (2022.01)

(52) Classification Coopérative des Brevets (CPC):
**G06V 10/82; G06V 10/764; G06V 40/11; G06V 40/1365**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **12.01.2024 FR 2400290**

(71) Demandeur: **IDEMIA Public Security France
92400 Courbevoie (FR)**

(72) Inventeurs:
- **KAZDAGHLI, Laurent Semy
  92400 COURBEVOIE (FR)**
- **NIAF, Emilie
  92400 COURBEVOIE (FR)**

(74) Mandataire: **IPS
2, place Samuel de Champlain
92400 Courbevoie (FR)**

(54) **PROCÉDÉ ET SYSTÈME DE CLASSIFICATION DE DACTYLOGRAMMES**

(57) Méthode (3000), mise en oeuvre par ordinateur, de classification de dactylogrammes parmi une pluralité de classes $C\_j$ d'appartenance dont chacune des classes correspond à une zone anatomique particulière $Z\_i$ de la face palmaire d'une main, ladite méthode (2000) prend, en tant que données d'entrée (I3000), au moins un dactylogramme D, et fournit, en tant que données de sortie (O3000), une classe C d'appartenance ou une liste L de classes $C\_k$ d'appartenance du dactylogramme D parmi la pluralité de classes $C\_j$ d'appartenance.

EP 4 586 213 A1

Processed by Luminess, 75001 PARIS (FR)

**Description**

**Domaine technique**

L'invention concerne un procédé et un système de classification de dactylogrammes. L'invention permet une identification automatique du type de dactylogrammes acquis par un dispositif d'acquisition de dactylogrammes.

**Arrière-plan technique**

Les dactylogrammes, généralement plus connus sous les termes « d'empreintes digitales » et/ou « d'empreintes palmaires », sont des dessins que forment les traces laissées par les dermatoglyphes des doigts et/ou des paumes de main sur les surfaces. Les dermatoglyphes sont les sillons superficiels formés sur les paumes, les plantes et la pulpe des doigts par les crêtes dermiques et disposés en lignes ou spirales. Ils sont propres à chaque individu et les dessins qu'ils forment en constituent une « carte d'identité » biométrique grâce à laquelle il peut être identifié.

Le relevé de dactylogrammes est une pratique courante dans diverses démarches administratives auprès des institutions d'Etat et dans les opérations menées par les forces de l'ordre auprès d'un suspect ou d'un prévenu dans le cadre d'une infraction, d'un délit ou d'un crime. Ce relevé est généralement réalisé à l'aide des dispositifs d'acquisition de dactylogrammes adaptés.

Ces dispositifs d'acquisition consistent généralement un boitier électronique comprenant une surface d'acquisition munie d'un capteur sur laquelle un ou plusieurs doigts, la main ou une partie de la main sont apposés pour en acquérir une image des dermatoglyphes.

US 2012 014569 A1, IB KOREA LTD [KR], 19.01.2012 décrit un dispositif portatif d'acquisition de dactylogrammes. Le dispositif comprend une surface d'acquisition munie d'un capteur électroluminescent sur laquelle les doigts d'une main peuvent être apposés pour acquérir une image de leurs dermatoglyphes.

US 2017 046554 A1, NEC CORP [JP], 16.02.2017 décrit un dispositif portatif d'acquisition de dactylogrammes digitaux. Ce dispositif est configuré pour fournir des instructions permettant à un utilisateur d'acquérir correctement des dactylogrammes.

Aujourd'hui, les dactylogrammes sont des informations biométriques très largement utilisées pour identifier des individus et/ou authentifier une opération telle qu'une opération bancaire sur internet ou l'utilisation, par un individu, d'un mot de passe parmi ceux stockés dans un portefeuille de mots de passe. Cependant, à la différence de l'authentification où un dactylogramme acquis pour un individu est comparé à un seul ou à un nombre très limité de dactylogrammes de référence (1:1), l'identification d'un individu à partir d'un dactylogramme requiert la comparaison de ce dactylogramme avec de nombreux dactylogrammes préalablement acquis auprès de plusieurs individus (1 :N) et généralement stockés dans une base de données.

Parce que les dactylogrammes sont des dessins aux caractéristiques complexes et que le nombre de comparaisons nécessaires lors d'une identification peut devenir très élevé, la comparaison des dermatoglyphes peut être longue malgré les ressources en calcul des dispositifs de traitement de données aujourd'hui disponibles. Afin de réduire le temps nécessaire pour la conduite de ces opérations, il est connu de classer les dactylogrammes selon différentes classes fondées sur certaines caractéristiques morphologiques des dermatoglyphes. A titre d'exemples, ces caractéristiques morphologiques peuvent être la forme générale du dermatoglyphe (orientation des boucles, arches, spirales...) selon notamment les catégories de Henry Faulds, Francis Galton et Edward Henry, le tracé global des crêtes, les « minuties » constituées par des points singuliers le long des crêtes (terminaison d'une crête, bifurcation...), la forme des crêtes, les pores ou encore les cicatrices.

US 5572597 A1, LORAL CORP [US], 05.11.1996 décrit une méthode de classification de dactylogrammes digitaux en différents types fondés sur les motifs globaux formés par les dermatoglyphes, notamment les crêtes et les sillons, de l'entièreté des empreintes digitales. La méthode de classification est fondée sur une analyse des directions et des angles formés par les motifs locaux des crêtes et des sillons dans des zones réduites d'intérêt des dactylogrammes.

EP 0 779 595 A2, NEC CORP [JP], 18.06.1997 décrit une méthode de classification de dactylogrammes digitaux selon cinq catégories dérivées des catégories de Henry Faulds, Francis Galton et Edward Henry : l'arc simple, l'arc tendu, la boucle droite, la boucle gauche et la spirale. La méthode est fondée sur une combinaison des résultats de deux classificateurs pour calculer une probabilité d'appartenance d'une empreinte digitale à l'une de ces quatre catégories.

US 5 825 907 A1, LUCENT TECHNOLOGIES INC [US], 20.10.1998 décrit une méthode de classification de dactylogrammes digitaux selon cinq catégories dérivées des catégories de Henry Faulds, Francis Galton et Edward Henry : la boucle droite, la boucle gauche, l'arc, la spirale et la double boucle. La méthode met en oeuvre un réseau de neurones artificiels configurés pour classer les dactylogrammes digitaux à partir d'une carte des formes locales des sillons.

Wang et al., Fingerprint Classification Based on Depth Neural Network, arXiv preprint arXiv:1409.5188, 2014 décrit une méthode de classification de dactylogrammes digitaux selon les quatre catégories de Edward Henry : l'arc, la boucle droite, la boucle gauche et la spirale. La méthode met en oeuvre, dans une première étape, un réseau de neurones artificielles entraîné selon un apprentissage non supervisé pour extraire la carte d'orientation d'un dactylogramme digital - la carte d'orientation d'un dactylogramme digital correspond au motif général de direction des crêtes du dermatoglyphe. Dans une deuxième étape, un modèle de régression logique entrainé de manière supervisée pour une classification « floue » (« fuzzy ») procède au calcul de la probabilité d'appartenance de la carte d'orientation à l'une des quatre catégories.

US 9 530 042 B1, UNIV KING SAUD [SA], 27.12.2016 décrit une méthode de classification de dactylogrammes digitaux selon quatre catégories dérivées des catégories de Henry Faulds, Francis Galton et Edward Henry : la boucle droite, la boucle gauche, l'arc et la spirale. La méthode met tout d'abord en oeuvre une opération de calcul d'un vecteur des caractéristiques pour chaque dactylogramme digital à l'aide d'un descripteur fondé sur un modèle binaire directionnel à gradient local. Les vecteurs sont ensuite traités par un réseau de neurones artificiels configurés pour classer les dactylogrammes dans l'une des quatre catégories.

Michelsanti et al., Fast Fingerprint Classification with Deep Neural Networks, VISIGRAPP 2017, décrit une méthode de classification de dactylogrammes digitaux selon les quatre catégories de Edward Henry : l'arc, la boucle droite, la boucle gauche et la spirale. La méthode met en oeuvre un réseau convolutif de neurones artificiels de type VGG-F ou VGG-S entrainé sur un ensemble de dactylogrammes digitaux classés selon les quatre catégories. Cette méthode permet l'extraction directe des caractéristiques des dactylogrammes et donc dispenser d'une étape intermédiaire pour cette extraction.

EP 3 825 915 A1, IDEMIA IDENTITY & SECURITY FRANCE [FR], 26.05.2021 décrit une méthode de classification de dactylogrammes digitaux selon un nombre donnée de catégories dérivées des catégories de Henry Faulds, Francis Galton et Edward Henry. La méthode met en oeuvre un réseau convolutif de neurones artificiels entrainé pour déterminer l'appartenance ou non à d'un dactylogramme digital à chaque catégorie. Un dactylogramme peut éventuellement appartenir à plusieurs catégories.

**Résumé de l'invention**

Problème technique

Selon les contextes d'exploitation et d'usage - par exemple, un cadre civil pour les démarches administratives et/ou de passage aux frontières ; un cadre pénal d'enregistrement des empreintes d'un suspect ou d'un prévenu -, l'acquisition de types de dactylogrammes, en sus des dactylogrammes digitaux, peut être pertinente car ils contiennent des informations biométriques supplémentaires susceptibles d'être utilisées comme moyens plus précis et supplétifs d'identification ou d'authentification d'un individu. Aussi, de nombreux dispositifs, tels que ceux décrits précédemment, sont-ils arrangés pour acquérir, outre des dactylogrammes digitaux, d'autres types de dactylogrammes tels que des dactylogrammes palmaires complets et/ou partiels, ou encore les dactylogrammes de plusieurs phalanges ou plusieurs doigts.

A l'instar des digitaux, pour une exploitation ultérieure efficiente de ces autres types de dactylogrammes, leur classification est un prérequis. En outre, parce qu'ils sont généralement acquis sur un même dispositif au cours d'une même campagne d'acquisition, cette classification doit à *minima* distinguer entre ces différents types. Or, les méthodes de classification des dactylogrammes digitaux sont totalement inadaptées pour une telle opération car elles sont exclusives de tous autres dactylogrammes que les digitaux.

Une première conséquence négative est qu'il revient à l'opérateur de procéder lui-même à la distinction ou la classification des différents types de dactylogrammes au cours de la compagne d'acquisition. Aussi consciencieux puisse-t-il être, le risque d'erreur demeure tant pour l'attribution correcte du dactylogramme à une catégorie que le repérage de dactylogrammes non conformes au type attendu lors de l'acquisition.

Une deuxième conséquence négative est l'inaptitude, toute aussi manifeste, des méthodes actuelles susmentionnées pour vérifier l'intégrité, à savoir l'exactitude, l'exhaustivité et la fiabilité, des dactylogrammes d'une base de données comprenant plusieurs types dactylogrammes, et le cas échéant, proposer des correctifs. Plus précisément, ces méthodes ne peuvent vérifier qu'un dactylogramme palmaire partielle correspondant à la partie inférieure d'une paume n'ait pas été, par méprise ou par inadvertance, classé comme un dactylogramme de plusieurs doigts ou phalanges.

Il est donc un besoin d'une méthode d'identification et/ou de classification fiable et automatique des dactylogrammes de types différents acquis lors de campagnes d'acquisition multimodale et/ou à l'aide, notamment, de dispositifs multimodaux tels que décrits précédemment.

**Solution technique**

Dans un premier aspect de l'invention, il est fourni une méthode, mise en oeuvre par ordinateur, de classification de dactylogrammes parmi une pluralité de classes d'appartenance dont chacune des classes correspond à une zone anatomique particulière de la face palmaire d'une main. Ladite méthode prend, en tant que données d'entrée, au moins un dactylogramme, et fournit, en tant que données de sortie, une classe d'appartenance ou une liste de classes d'appartenance du dactylogramme parmi la pluralité de classes d'appartenance. Ladite méthode comprend les étapes suivantes :

- fournir un réseau convolutif de neurones artificiels, ledit réseau convolutif étant préalablement entrainé sur un ensemble de données d'entrainement composé d'une pluralité de dactylogrammes classés selon une pluralité de classes dont chacune des classes correspond à une zone anatomique particulière d'une main, ledit réseau de convolutif étant configuré pour fournir les probabilités d'appartenance de chaque dactylogramme de l'ensemble E à chacune des classes de la pluralité de classes d'appartenance ;

- inférer, à l'aide du réseau neurone convolutif entrainé, les probabilités d'appartenance du dactylogramme fourni en tant que données d'entrée à chacune des classes de la pluralité de classes d'appartenance ;

- sélectionner une classe d'appartenance parmi les classes d'appartenance pour laquelle la probabilité d'appartenance du dactylogramme fourni en tant que données d'entrée est la plus élevée parmi les probabilités d'appartenance inférées pour desdites classes, ou une liste d'un nombre de classes d'appartenance sélectionnées parmi la pluralité de classes d'appartenance et triées selon un ordre croissant ou décroissant des probabilité d'appartenance auxdites classes inférées pour le dactylogramme fourni en tant que données d'entrée.

Des modes avantageux de réalisation du premier aspect de l'invention sont décrits en détail ci-après.

Dans un deuxième aspect de l'invention, il est fourni un dispositif de traitement de données comprenant des moyens de mettre en oeuvre une méthode selon le premier aspect de l'invention.

Dans un troisième aspect de l'invention, il est fourni un programme d'ordinateur comprenant des instructions qui, lorsque le programme est exécuté par un ordinateur, conduisent celui-ci à mettre en oeuvre une méthode selon le premier aspect de l'invention.

Dans un quatrième aspect de l'invention, il est fourni un support lisible par ordinateur comprenant des instructions qui, lorsqu'elles sont exécutées par un ordinateur, conduisent celui-ci à mettre en oeuvre une méthode selon le premier aspect de l'invention.

Dans un cinquième aspect de l'invention, il est fourni un système de classification parmi une pluralité de classes d'appartenance, ledit système comprenant un dispositif d'acquisition de dactylogrammes et un dispositif de traitement de données selon le deuxième aspect de l'invention.

## Brève description des dessins

Fig. 1 est un exemple de dispositif d'acquisition de dactylogrammes.

Fig. 2 est une table regroupant des exemples de représentations schématiques de classes de dactylogrammes dans lesquelles chacune des classes correspond à une zone anatomique particulière d'une main.

Fig. 3 est un ordinogramme d'une méthode selon le premier aspect de l'invention.

Fig. 4 est une représentation schématique d'architecture de réseau convolutif de neurones artificiels selon un exemple de réalisation d'une méthode selon le premier aspect de l'invention.

Fig. 5 est une représentation d'un dispositif de traitement de données selon le deuxième aspect de l'invention.

Fig. 6 est une représentation de la performance de classification d'un exemple d'une méthode selon le premier aspect de l'invention exprimée en nombre de réussites et d'échec de classification en fonction de la probabilité d'appartenance à la classe prédite par ladite méthode.

## Description détaillée des modes de réalisation

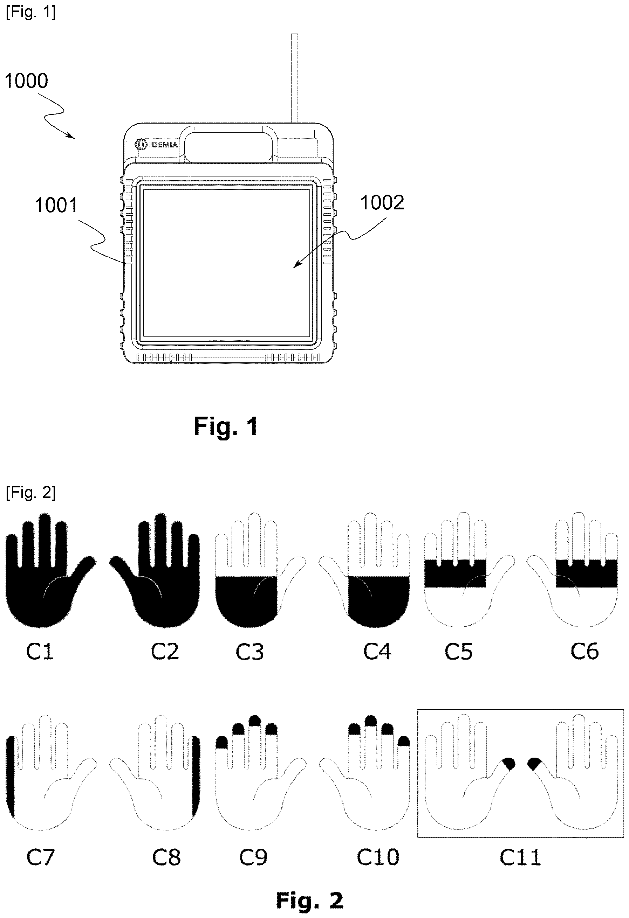

Sur la Fig. 1 est représenté schématiquement un exemple de dispositif multimodal 1000 d'acquisition de dactylogrammes permettant d'acquérir, outre des dactylogrammes digitaux, d'autres types de dactylogrammes tels que des dactylogrammes palmaires complets et/ou partiels, ou encore les dactylogrammes de plusieurs phalanges ou plusieurs doigts. Le dispositif comprend généralement un boitier électronique 1001 muni d'une surface d'acquisition 1002 sur laquelle un ou plusieurs doigts, la main ou une partie de la main peuvent être apposés pour en acquérir une image des dermatoglyphes. De nombreux dispositifs de ce type sont décrits dans l'état de la technique.

Les dactylogrammes acquis par un dispositif multimodal tel que celui décrit précédemment se présentent généralement sous la forme d'une image des dessins formés par les dermatoglyphes. Ces images peuvent être des images monocanales, par exemple, une image en niveaux de gris, ou des images multicanales, par exemple des images RGB.

Les dactylogrammes peuvent être classés selon plusieurs classes d'appartenance, chacune des classes correspondant à une zone atomique particulière de la face palmaire de la main à laquelle ils correspondent. Il est entendu par « face palmaire » d'une main la face de la main sur laquelle est comprise la paume de la main, au contraire de la face dorsale. La face palmaire comprend la paume et l'ensemble des doigts, autrement dit le pouce, l'index, le majeur, l'annulaire, l'auriculaire, l'éminence thénar, le creux et l'éminence hypothénar. Cette définition correspond à celle communément admise en anatomie.

Le nombre de classes d'appartenance n'est pas limité et peut être variable selon les besoins et les contextes d'exploitation et d'usage. De même, la nature des classes d'appartenance, c'est-à-dire les zones anatomiques de la face palmaire de la main auxquelles elles correspondent, peut être définie ou personnalisée selon les mêmes besoins et contextes d'exploitation et d'usage

Néanmoins, dans la pratique, en référence à la Fig. 2, il peut être distingué, parmi les différents types de dactylogrammes, 11 classes C1-C11 d'appartenance correspondant à des zones anatomiques différentes de la face palmaire de la main et adaptées à un très grand nombre de besoins et cas d'usages : la main droite complète (C1), la main gauche complète (C2), une zone inférieure de la paume de la main droite (C3), une zone inférieure de la paume de la main gauche (C4), une zone supérieure de la main droite (C5), une zone supérieure de la main gauche (C6), la paume droite de l'écrivain (C7), la paume gauche de l'écrivain (C8), au moins deux, de préférence trois, de préférence quatre doigts de la main droite (C9), au moins deux, de préférence trois, de préférence quatre doigts de la main gauche (C10), les pouces de la main droite et de la main gauche (C11).

A titre d'exemples, dans un premier cadre d'enregistrement pour des démarches administratives, il peut être avantageux d'acquérir cinq classes différentes telles qu'une zone inférieure de la paume de la main droite, une zone inférieure de la paume de la main gauche, quatre doigts de la main droite, quatre doigts de la main gauche, et les deux pouces. En revanche, dans un deuxième cadre d'enregistrement des empreintes d'un suspect ou d'un prévenu, le nombre de types de dactylogrammes et donc de classes d'appartenance peut être plus élevé de manière à obtenir des informations biométriques plus exhaustives possibles. Outre les classes précédentes, il comprend une ou plusieurs classes parmi la main droite complète, la main gauche complète, une zone supérieure de la main droite, une zone supérieure de la main gauche, la paume droite de l'écrivain, la paume gauche de l'écrivain.

Comme expliqué précédemment, pour une exploitation efficiente et/ou une acquisition efficace des différents types de dactylogrammes susceptibles d'être acquis, il est nécessaire de procéder à leur classification. Toutefois, les méthodes actuelles de classification des dactylogrammes digitaux sont totalement inadaptées, avec les conséquences négatives décrites précédemment.

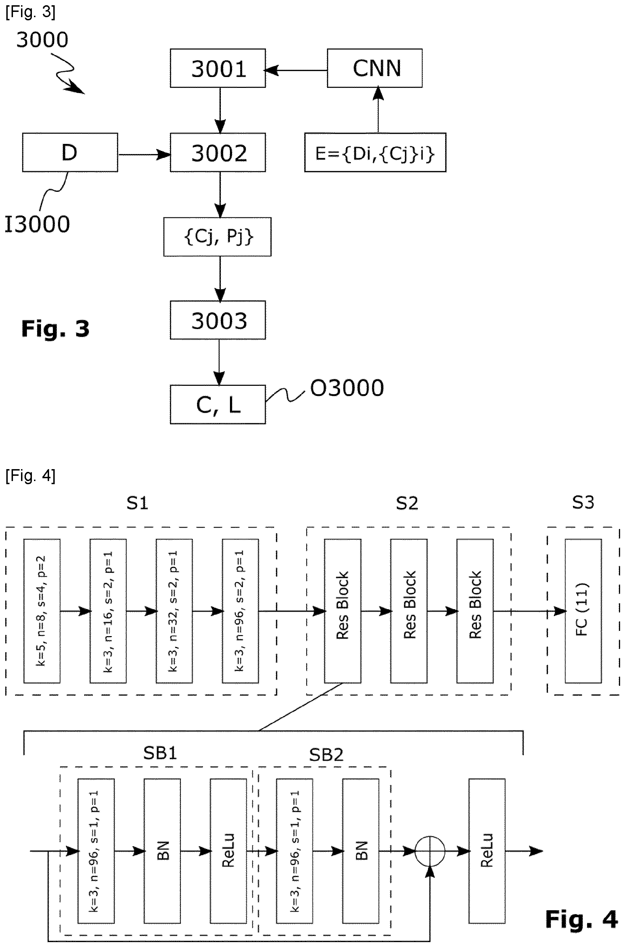

Aussi, selon un premier aspect de l'invention, en référence à la Fig. 3, il est fourni une méthode 3000, mise en oeuvre par ordinateur, de classification de dactylogrammes parmi une pluralité de classes $C\_j$ d'appartenance dont chacune des classes correspond à une zone anatomique particulière $Z\_i$ de la face palmaire d'une main. La méthode 3000 prend, en tant que données d'entrée 13000, au moins un dactylogramme D, et fournit, en tant que données de sortie O3000, une classe C d'appartenance ou une liste L de classes $C\_k$ d'appartenance du dactylogramme D parmi la pluralité de classes $C\_j$ d'appartenance. La méthode 3000 comprend les étapes suivantes :

- fournir 3001 un réseau convolutif CNN de neurones artificiels, ledit réseau convolutif CNN étant préalablement entrainé sur un ensemble E de données d'entrainement composé d'une pluralité de dactylogrammes $D\_i$ classés selon une pluralité de classes CJ dont chacune des classes correspond à une zone anatomique particulière d'une main, ledit réseau de convolutif CNN étant configuré pour fournir les probabilités d'appartenance $P\_j$ de chaque dactylogramme $D\_i$ de l'ensemble E à chacune des classes de la pluralité de classes $C\_j$ d'appartenance ;
- inférer 3002, à l'aide du réseau neurone convolutif CNN entrainé, les probabilités d'appartenance $P\_i$ du dactylogramme D fourni en tant que données d'entrée 13000 à chacune des classes de la pluralité de classes CJ d'appartenance ;
- sélectionner 3003 une classe C d'appartenance parmi les classes $C\_j$ d'appartenance pour laquelle la probabilité d'appartenance P du dactylogramme D fourni en tant que données d'entrée I3000 est la plus élevée parmi les probabilités $P\_i$ d'appartenance inférées pour desdites classes $C\_j$, ou une liste L d'un nombre k de classes d'appartenance $C\_k$ sélectionnées parmi la pluralité de classes $C\_j$ d'appartenance et triées selon un ordre croissant ou décroissant des probabilité $P\_k$ d'appartenance auxdites classes $C\_k$ inférées pour le dactylogramme D fourni en tant que données d'entrée I3000.

Il est entendu par « pluralité de classes » un ensemble comprenant au moins deux classes.

En pratique, à l'étape 3002 d'inférence, en sortie du réseau convolutif CNN, il est fourni un vecteur ou une liste V = {PJ} dont chacune des valeurs est la probabilité P_j d'appartenance pour chacune des classes de la pluralité de classes C_j d'appartenance. Il y a ainsi un vecteur V pour chaque dactylogramme D fourni en tant que donnée d'entrée I3000.

A l'étape 3001, selon une première alternative, il est procédé à la sélection d'une classe C d'appartenance parmi les classes C_j d'appartenance pour laquelle la probabilité d'appartenance P du dactylogramme D fourni en tant que données d'entrée I3000 est la plus élevée parmi les probabilités P_i d'appartenance inférées pour desdites classes CJ. Cette opération de sélection peut être exprimée selon la formule mathématique suivante :

$$C = C_l \in \{C_j\}, P_l = \max\{P_j\}$$

Selon une deuxième alternative, il est procédé à la sélection d'une liste L d'un nombre k de classes d'appartenance C_k sélectionnées parmi la pluralité de classes C_j d'appartenance et triées selon un ordre décroissant des probabilité P_k d'appartenance auxdites classes C_k inférées pour le dactylogramme D fourni en tant que données d'entrée I3000.

Un premier avantage remarquable de la méthode selon le premier aspect de l'invention est de réduire le risque d'erreur qu'un opérateur est susceptible de commettre lors de l'attribution d'une classe à un dactylogramme au cours ou juste après son acquisition. La méthode peut ainsi être considérée comme procurant une fonction correctrice, de contrôle ou de double vérification lors de l'acquisition.

Selon un premier exemple d'implémentation, la méthode selon le premier aspect peut procurer une fonction de contrôle de la classe de dactylogramme attendue lors d'une campagne d'acquisition de dactylogrammes. Par comparaison de la classe qu'elle attribue à un dactylogramme tout juste acquis à la classe attendue pour ce dactylogramme, elle permet de vérifier à la volée que la campagne d'acquisition se déroule conformément à un programme d'acquisition préalablement établi tel que l'acquisition d'une seule classe donnée de dactylogramme ou à un ordre d'acquisition de dactylogrammes de classes différentes. En cas de non-conformité à l'attendu, un signal d'avertissement peut être envoyé à l'opérateur par tout moyen approprié. Par exemple, il peut notamment être attendu, lors d'une campagne d'acquisition, que plusieurs dactylogrammes de classes différentes soient acquis dans un certain ordre : quatre doigts de la main droite, puis quatre doigts de la main gauche, puis la paume de la main droite, puis enfin la paume de la main gauche. Si, par une erreur d'instructions de la part de l'opérateur et/ou par mégarde de la personne pour laquelle les dactylogrammes sont acquis, un dactylogramme de la paume de la main gauche est acquis au lieu de la droite, par comparaison de la classe la méthode attribue au dactylogramme ainsi acquis à celle attendue, un signal d'avertissement peut être envoyé à l'opérateur afin qu'il procède à une nouvelle acquisition

Selon un deuxième exemple d'implémentation, la méthode peut procurer une fonction correctrice *a posteriori*. A l'issu de l'acquisition d'un dactylogramme pour lequel un opérateur doit attribuer manuellement une classe appartenance, la méthode peut permettre de vérifier que la classe ainsi attribuée par l'opérateur est correcte. Par exemple, la méthode peut vérifier qu'un dactylogramme d'une paume de main droite n'est pas été classé par l'opérateur comme un dactylogramme d'une paume de main gauche. Dans l'éventualité où la classe initialement attribuée par l'opérateur ne correspond pas à celle que la méthode selon l'invention aurait attribué, un signal d'avertissement peut être émis par tout moyen approprié à l'opérateur de manière qu'il puisse valider sa classification ou la corriger sur la base de la classe suggérée par la méthode. Tout comme précédemment, cette double vérification, ici d'abord humaine puis machine, permet de garantir l'exactitude de la classification des dactylogrammes et d'assurer l'intégrité des bases de données dans lesquelles les dactylogrammes sont ensuite susceptibles d'être stockés.

Selon un troisième exemple d'implémentation, la méthode peut procurer une fonction correctrice *a priori*. Dès lors qu'un dactylogramme est acquis à l'aide d'un dispositif, elle peut en proposer une classe d'appartenance, voire plusieurs classes d'appartenances triées selon un ordre décroissant de leur valeur de probabilité d'appartenance, à un opérateur qui a le choix de valider ou non cette proposition, ou de choisir une classe parmi celles proposées. Le risque d'une mauvaise classification par l'opérateur est ainsi réduit puisqu'il doit procéder à un choix pour une classe ou un nombre limité d'entre elles. En outre, notamment dans l'éventualité où l'acquisition d'un dactylogramme ait lieu dans des conditions difficiles, le risque d'une mauvaise classification par la méthode elle-même peut être éliminé par l'intervention de l'opérateur à qui incombe la décision finale quant au choix de la classe d'attribution. Cette double vérification, d'abord machine puis humaine, permet de garantir l'exactitude de la classification des dactylogrammes et assurer l'intégrité des bases de données dans lesquelles les dactylogrammes sont ensuite susceptibles d'être stockés.

Un deuxième avantage remarquable de la méthode selon le premier aspect de l'invention est de permettre de vérifier l'intégrité d'une base de données de dactylogrammes de classes différentes. Par exemple, une base de données comprenant des dactylogrammes de classes différentes peut contenir des erreurs de classement. La méthode peut être avantageusement utilisée pour détecter et corriger ces erreurs en lui fournissant comme données d'entrée chacun des dactylogrammes de la base de données et en comparant la classe qu'elle lui attribue selon la plus grande probabilité d'appartenance avec celle renseignée dans la base de données pour ce dactylogramme. En cas de non-correspondance entre les deux classes, il peut être procédé à une correction automatique et/ou au référencement du dactylogramme dans une liste appropriée pour un contrôle ultérieur par un opérateur.

Selon certains modes préférés de réalisation, en référence à la Fig. 3, les classes de la pluralité de classes d'appartenance sont sélectionnées parmi la main droite complète (C1), la main gauche complète (C2), une zone inférieure de la paume de la main droite (C3), une zone inférieure de la paume de la main gauche (C4), une zone supérieure de la main droite (C5), une zone supérieure de la main gauche (C6), la paume droite de l'écrivain (C7), la paume gauche de l'écrivain (C8), au moins deux, de préférence trois, de préférence quatre doigts de la main droite (C9), au moins deux, de préférence trois, de préférence quatre doigts de la main gauche (C10), les pouces de la main droite et de la main gauche (C11). La pluralité de classes d'appartenance peut ainsi comprendre un nombre de classes égal ou supérieur à deux jusqu'à la totalité des onze classes d'appartenance.

Le réseau convolutif de neurones artificiels est de tout type adapté pour l'implémentation de la méthode selon le premier aspect de l'invention. Selon certains modes préférés de réalisation, le réseau convolutif CNN de neurones artificiels comprend :

- une première séquence S1 de couches convolutives de neurones artificiels ;
- une deuxième séquence S2 de blocs convolutifs résiduels de neurones artificiels ;
- une troisième séquence S3 comprenant au moins une couche de neurones artificiels entièrement connectés.

La première séquence S1 de couches convolutives a pour fonction, d'une part, de réduire les dimensions du dactylogramme et, d'autre part, d'augmenter le nombre de cartes topographiques (ou cartes de caractéristiques) pertinentes pour l'extraction des motifs et caractéristiques de bas niveau tels que la distribution et l'intensité des couleurs, les textures, les formes, et les contrastes locaux. La deuxième séquence S2 de blocs convolutifs a pour fonction d'augmenter le champ réceptif du réseau tout en améliorant l'extraction des caractéristiques de bas et haut niveaux grâce à la combinaison des cartes topographiques de couches différentes au travers des connexions résiduelles. Le dernière séquence S3 de couches de neurones artificiels entièrement connectés a pour fonction de combiner l'ensemble des caractéristiques extraites par les deux séquences précédentes pour établir une probabilité d'appartenance d'un dactylogramme à chacune des classes de la pluralité de classes d'appartenance.

Comme expliqué précédemment, en sortie de la séquence S3 de couches de neurones artificiels, chacune des valeurs du vecteur $V = \{PJ\}$ dont est une probabilité $P\_j$ d'appartenance pour chacune des classes de la pluralité de classes $C\_j$ d'appartenance. Ces valeurs sont propres au réseau convolutif et se présentent généralement sous la forme de nombres réels dont la distribution diffère des distributions usuelles de probabilités sur un intervalle [-1 ;1] ou [0 ;1]. Aussi, le vecteur V peut-il faire l'objet d'une conversion à l'aide d'une fonction de conversion peut-être par exemple de type sigmoïde ou, de préférence de type « softmax ».

Sur la Fig. 4 est illustré un exemple détaillé de réseau convolutif CNN adapté pour la classification, parmi les 11 classes d'appartenances selon les modes de réalisation décrits précédemment, de dactylogrammes fournis sous la forme d'images multicanaux tels que le format RGB avec une résolution égale inférieure à 1000x1000 pixels entre 100 et 500 dpi. En détail, le réseau convolutif CNN comprend :

- une première séquence S1 de quatre couches convolutives successives dont la dimension k de leur noyau (« kernel »), le nombre n d'instances de leur noyau, le pas s (« stride ») et le remplissage p (« padding ») sont respectivement : (k = 5, n = 8, s = 2, p = 2), (k = 3, n = 16, s = 2, p = 1), (k = 3, n = 32, s = 2, p = 1) et (k = 3, n = 96, s = 2, p = 1), et chaque couche convolutive étant suivie d'une couche de correction de type ReLu ;
- une deuxième séquence S2 de trois blocs convolutifs résiduels de type « Depthwise Separable Convolutions » ; chacun des blocs comprenant deux sous-blocs SB1, SB2 avec une connexion résiduelle à la sortie du deuxième sous-bloc, suivie d'une couche de correction de type ReLu avant l'entrée du bloc suivant ; le premier sous-bloc SB1 est composé d'une couche convolutive avec n = 96 instances de noyaux de dimension k = 3, un pas s = 1, et un remplissage p=1, d'une couche de normalisation par lots (« batch normalization ») et d'une couche de correction de type ReLu ; le deuxième sous-bloc SB2 est composé d'une couche convolutive avec n = 96 instances de noyaux de dimension k = 3, un pas s = 1, et un remplissage p=1, et d'une couche de normalisation par lots (« batch normalization ») ;
- une troisième séquence S3 comprenant une couche de neurones artificiels entièrement connectés fournissant en sortie un vecteur de dimension 11 dont chacune des dimensions correspond à chacune des 11 classes d'appartenance décrites dans le cadre de la Fig. 2 ; éventuellement, en sortie de la deuxième séquence S2 et avant l'entrée dans la troisième séquence, les cartes topographiques peuvent l'objet d'une opération d'aplanissement (« flatten »).

Le réseau convolutif CNN de neurones artificiels représenté sur la Fig. 4 étant un exemple, il n'a aucun caractère limitatif dans le cadre de la présente invention. Le nombre de couches dans chacune des séquences décrites précédemment, les dimensions des noyaux de convolution, le nombre de leurs instances, les valeurs de pas et remplissage peuvent être adaptés au différents besoins et cas d'usage des dactylogrammes, notamment quant au format, la résolution et les conditions d'acquisition de leurs images.

Selon certaines modes complémentaires de réalisation, le réseau convolutif CNN de neurones artificiels comprend en outre, entre la première séquence S1 et la deuxième séquence S2, une étape de rééchantillonnage spatial, de préférence par interpolation bilinéaire. La fonction de cette étape de rééchantillonnage est de redimensionner des cartes topologiques (ou cartes de caractéristiques) obtenues en sortie de la deuxième séquence en cartes topologiques de taille fixe avant leur entrée dans la troisième séquence, et ce quelle que soit la taille des dactylogrammes fournis en entrée de la méthode ou du réseau convolutif de neurones artificiels. La valeur de la taille fixe à laquelle les cartes topographiques sont réduites correspond au nombre de neurones d'entrée de la troisième séquence comprenant au moins une couche de neurones artificiels entièrement connectés.

Grâce à cette étape de rééchantillonnage spatial, la méthode peut prendre en donnée d'entrée des dactylogrammes de toute taille. Elle peut ainsi être avantageusement implémentée avec tout type de dispositif d'acquisition de dactylogrammes sans qu'il soit nécessaire de procéder à un redimensionnement des dactylogrammes qu'ils sont susceptibles de fournir. Elle peut également être utilisée pour la classification de dactylogrammes contenues dans une base de données dont les tailles de ne sont pas homogènes.

L'entraînement, encore appelé apprentissage, du réseau convolutif de neurones artificiels peut être implémenté de toute manière adaptée. Selon certains modes avantageux de réalisation, la fonction de coût utilisée lors de l'entrainement du réseau convolutif CNN de neurones artificiels comprend une fonction de coût de type entropie croisée (« cross-entropy function »). Concrètement, une fonction d'entropie croisée compare la distribution, q, de probabilités - en l'occurrence les probabilités P_j d'appartenance à chacune des classes C_j d'appartenance - prédites par un modèle (le réseau convolutif CNN de neurones artificiels), avec une distribution, p, de probabilités de référence d'un ensemble de données d'entrainement sur lequel le modèle est appliqué - en l'occurrence les probabilités, égales à 0 ou 1, d'appartenance aux classes C_j des dactylogrammes d'un ensemble d'entrainement comprenant des dactylogrammes préalablement classés. L'apprentissage du modèle est mis en oeuvre de manière itérative par minimisation de la divergence entre les deux distributions. Un exemple de fonction, f, de coût de type entropie croisée peut être exprimée de la manière suivante, avec j le nombre de classes d'appartenance CJ :

$$ f = H(p, q) = - \sum_j p(j) \log q(j) $$

Lorsque, conformément à certains modes de réalisation décrits précédemment, le réseau convolutif de neurones artificiels comprend une séquence comprenant au moins une couche de neurones artificiels entièrement connectés, la fonction de coût peut comprendre en outre une fonction de conversion, des vecteurs réels en sortie ladite couche en distribution de probabilités sur l'intervalle [0 ; 1]. La fonction de conversion peut-être par exemple de type sigmoïde ou, de préférence de type « softmax ». Cette fonction est appliquée avant la fonction d'entropie croisée.

Selon les besoins et les cas d'usage, la méthode selon le premier aspect de l'invention permet de différencier les dactylogrammes issus de la main droite de deux de la main gauche, et vice versa. Elle est de préférence sensible à la chiralité, c'est-à-dire à la relation de symétrie axiale entre une main et l'autre, par exemple entre un dactylogramme de la paume droite et celui de la paume gauche. Ainsi, selon certains modes avantageux de réalisation, la fonction de coût utilisée lors de l'entrainement du réseau convolutif CNN de neurones artificiels comprend une fonction de sensibilité à la symétrie axiale.

Une telle fonction de sensibilité à la symétrie axiale peut être implémentée, lors de l'entrainement, de la manière suivante. Pour chaque dactylogramme d'un ensemble d'entraînement, il est d'abord procédé à la création d'un dactylogramme symétrique obtenu par une opération de symétrie axiale dudit dactylogramme. Chaque dactylogramme et son symétrique sont ensuite fournis comme données d'entrée d'entrainement au réseau convolutif de neurones artificiels pour en calculer les probabilités d'appartenance à chacune des classes de la pluralité de classes d'appartenance. Ces probabilités d'appartenance se présentent, en sortie du réseau, sous la forme d'un vecteur dont les valeurs correspondent à la probabilité d'appartenance pour chacune des classes de la pluralité de classes d'appartenance. Il y a ainsi un vecteur V[D_i] pour chaque dactylogramme D_i de l'ensemble d'entraînement et un vecteur Vs[sD_i] pour chaque dactylogramme symétrique sD_i correspondant.

A l'issue de cette étape de classification, les vecteurs V[D_i] font l'objet d'une opération de symétrie consistant à attribuer les valeurs de probabilités d'une classe correspondant à zone anatomique d'une main, par exemple la main droite, à la classe correspondante de l'autre main, par exemple à la main gauche ; le vecteur ainsi obtenu est noté S(V[D_i]). A titre d'exemple illustratif, pour une pluralité de classes comprenant les classes « dactylogramme de la paume de la main droite » et « dactylogramme de la paume de la main gauche », la probabilité d'appartenance de la classe « dactylogramme de la paume de la main droite » est attribuée à la classe « dactylogramme de la paume de la main gauche » et réciproquement.

La fonction de sensibilité peut alors être exprimée sous la forme d'une distance euclidienne entre le vecteur Vs[sD_i] et le vecteur S(V[D_i]), éventuellement affecté d'un facteur de pondération. Intégrée à la fonction de coût précédente, la fonction de sensibilité peut s'écrire :

$$f = -\sum_{j} p(j) \log q(j) + \alpha L_2\big(Vs[sD_j], S(V[D_j])\big)$$

Lors de l'entraînement du réseau convolutif de neurones artificiels, il est procédé, via la fonction de coût, à la minimisation de cette distance. A cet effet, un algorithme d'optimisation de type Adam peut être utilisé.

Selon certains modes préférés de réalisation, le réseau convolutif CNN de neurones artificiels, est entrainé à l'aide d'une pluralité d'ensembles de dactylogrammes d'entraînement, chaque ensemble comprenant des dactylogrammes de dimension identique. Ainsi, le réseau convolutif de neurones artificiels n'est pas influencé, lors de son entrainement, par d'éventuelles variations de dimensions des dactylogrammes au sein d'un même ensemble. La modélisation des caractéristiques pertinentes des dermatoglyphes que représentent les dactylogrammes est alors plus précise. Les dimensions des dactylogrammes entre les ensembles peuvent néanmoins être différentes, en particulier lorsque la méthode est adaptée pour prendre en donnée d'entrée des dactylogrammes de toute taille, conformément à certains modes de réalisation décrits précédemment.

Selon certains modes de réalisation, le réseau convolutif CNN de neurones artificiels est entrainé sur des ensembles de dactylogrammes d'entrainement ayant été préalablement augmentés par des dactylogrammes sélectionnés dans lesdits ensembles à une ou plusieurs fréquences préalablement définies, lesdits dactylogrammes sélectionnés ayant préalablement fait l'objet d'une opération d'amputation et/ou de transformation par symétrie axiale.

L'ajout de dactylogrammes amputés aux ensembles d'entrainement est particulièrement avantageux en ce qu'il permet de réduire la sensibilité de la méthode à l'absence éventuellement de certains éléments des dactylogrammes, par exemple à l'absence d'un ou plusieurs doigts lorsqu'il s'agit d'une main ayant subi une amputation chirurgicale. L'opération d'amputation des dactylogrammes peut, par exemple, consister dans le retrait volontaire de certains doigts ou de certaines régions d'un dactylogramme sélectionné dans un ensemble d'entrainement. Elle peut être réalisée à la fréquence 1/6, c'est-à-dire qu'au sein d'ensemble d'entrainement un dactylogramme sur six est sélectionné et fait l'objet d'une opération d'amputation. Le nouveau dactylogramme ainsi obtenu est ensuite ajouté à l'ensemble d'entrainement.

L'ajout de dactylogrammes ayant fait l'objet d'une opération de symétrie axiale est avantageux en ce qu'il permet d'améliorer la sensibilité de la méthode à la chiralité et d'harmoniser, au sein d'un ensemble d'entrainement, la distribution des dactylogrammes entre ceux correspondant à la main droite et ceux correspondant à la main gauche. L'opération de symétrie axiale peut, par exemple, consister à réaliser une opération de symétrie axiale sur un dactylogramme sélectionné dans un ensemble d'entrainement, et le nouveau dactylogramme ainsi obtenu est ensuite ajouté audit ensemble, sa classe d'appartenance ayant été préalablement modifié conformément à la main gauche ou droite qu'il représente. Cette opération peut être réalisée à une fréquence 1/2, c'est-à-dire qu'au sein d'ensemble d'entrainement un dactylogramme sur deux est sélectionné et fait l'objet d'une opération de symétrie axiale.

Les ensembles de dactylogrammes d'entrainement peuvent également être augmentés à l'aide d'autres méthodes connues telles que le changement de d'échelle, le changement de contraste, les opérations de rotation et les opérations de remplissage (« padding »).

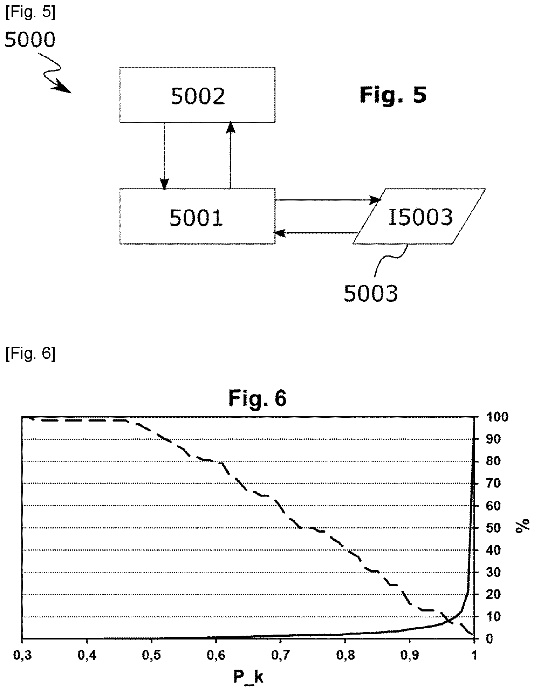

La méthode selon le premier aspect de l'invention est mise en oeuvre par ordinateur. En référence à la Fig. 5, dans un deuxième aspect de l'invention, il est fourni un dispositif 5000 de traitement de données comprenant des moyens pour la mise en oeuvre d'une méthode 3000 selon l'un des quelconques modes de réalisation du premier aspect de l'invention.

Un exemple de dispositif peut être un dispositif chargé d'exécuter automatiquement des séquences d'opérations arithmétiques ou logiques pour réaliser des tâches ou des actions. Ce dispositif, également appelé ordinateur, peut comprendre une ou plusieurs unités centrales de traitement (CPU) et/ou un ou plusieurs processeurs graphiques (GPU) 5001 ainsi qu'au moins un dispositif de contrôle adapté à l'exécution de ces opérations. Il peut également comprendre d'autres composants électroniques tels que des interfaces d'entrée/sortie 5002, des dispositifs de stockage non volatils ou volatils 5003, et des bus de communication pour le transfert de données entre les composants internes du dispositif ou avec des composants externes. L'un des dispositifs d'entrée/sortie 5002 peut être une interface utilisateur pour l'interaction homme-machine, par exemple une interface utilisateur graphique pour afficher des informations compréhensibles par l'homme.

Selon un troisième aspect de l'invention, il est fourni un programme d'ordinateur I5003 comprenant des instructions qui, lorsque le programme est exécuté par un ordinateur, conduisent celui-ci à mettre en oeuvre une méthode (3000) selon l'un des quelconques modes de réalisation du premier aspect de l'invention.

Tout type de langage de programmation, compilé ou interprété, peut être utilisé pour mettre en oeuvre les étapes de la méthode de l'invention. Le programme d'ordinateur peut faire partie d'une solution logicielle, c'est-à-dire d'une collection d'instructions exécutables, de codes, de scripts ou autres et/ou de bases de données.

Selon un quatrième aspect de l'invention, il est fourni un support d'enregistrement 5003 lisible par ordinateur comprenant des instructions qui, lorsqu'elles sont exécutées par un ordinateur, conduisent celui-ci à mettre en oeuvre une méthode selon l'un des quelconques modes de réalisation du premier aspect de l'invention.

Le support d'enregistrement 5003 lisible par ordinateur est de préférence une mémoire non volatile, par exemple un disque dur ou un lecteur à semiconducteurs. Il peut être un support de stockage amovible ou un support de stockage non amovible faisant partie d'un ordinateur.

Le support d'enregistrement 5003 lisible par ordinateur peut également être une mémoire volatile à l'intérieur d'un support amovible. Cela peut faciliter le déploiement de l'invention dans de nombreux sites de production.

Le support d'enregistrement 5003 lisible par ordinateur peut faire partie d'un ordinateur utilisé comme serveur à partir duquel des instructions exécutables peuvent être téléchargées et, lorsqu'elles sont exécutées par un ordinateur, faire en sorte que l'ordinateur exécute une méthode selon l'un des modes de réalisation décrits dans le présent document.

Le programme d'ordinateur I5003 et le support 5003 sur lequel il est enregistré peuvent être mis en oeuvre dans un environnement informatique distribué, par exemple l'informatique en nuage. Les instructions peuvent être exécutées sur un serveur auquel un ou plusieurs ordinateurs clients peuvent se connecter et fournir des données codées en tant que données d'entrée d'une méthode selon l'un quelconque des modes de réalisation du premier aspect de l'invention. Une fois les données traitées, le résultat peut être téléchargé et décodé sur l'ordinateur client ou être envoyé directement, par exemple, sous forme d'instructions.

Dans un cinquième aspect de l'invention, il est fourni un système de classification de dactylogrammes parmi une pluralité de classes d'appartenance, ledit système comprend :

- un dispositif (1000) d'acquisition de dactylogrammes ;
- un dispositif (5000) de traitement de données selon le deuxième aspect de l'invention, ledit dispositif (5000) de traitement de données est en outre configuré pour recevoir et traiter des dactylogrammes D acquis par le dispositif (1000) d'acquisition de dactylogrammes.

Selon certaines modes de réalisation, le dispositif (5000) de traitement de données est outre configuré pour émettre un signal avertissement lorsqu'un dactylogramme acquis par le dispositif d'acquisition n'est pas conforme à la classe attendue pour ledit dactylogramme et/ou est attribué à une classe non conforme par un opérateur du système. En particulier, le dispositif peut être configuré selon l'un quelconque des trois exemples d'implémentation de la méthode selon le premier aspect de l'invention décrit précédemment.

Exemple

Afin de d'illustrer les performances de la méthode selon l'invention, il est fourni un exemple de méthode conformément à certains modes de réalisation décrits précédemment. Le réseau convolutif implémenté est celui décrit en relation avec la Fig. 4. Il a été entrainé sur un ensemble d'entraînement comprenant plus 3000 dactylogrammes classés selon les 11 classes d'appartenance telles que celles illustrées sur la Fig. 2.

Sur la Fig. 6 sont représentées les occurrences, exprimées en pourcentage, de classement correct (ligne brisée) et incorrect (ligne continue) des dactylogrammes en fonction des valeurs probabilités $P\_K$ d'appartenance inférées par la méthode selon l'exemple. Le graphique montre que 95% des dactylogrammes qui ont été correctement classés l'ont été avec une probabilité supérieure à 0,9. Et seulement 15% des dactylogrammes qui ont été incorrectement classés l'ont été avec une probabilité supérieure à 0,9.

En fixant, pour la probabilité d'appartenance, un seuil de fiabilité à 0,9, en-dessous duquel la prédiction est considérée comme non fiable, 5,4% des dactylogrammes de l'ensemble d'entraînement peuvent être éliminé, et le pourcentage de dactylogrammes correctement classés sur les 94,6% des dactylogrammes restants atteint 99,7%. Il a été constaté que les 5,4% des dactylogrammes de l'ensemble d'entrainement ainsi éliminés correspondaient à des cas dits difficiles pour lesquels l'attribution d'une classe d'appartenance n'est pas aisée même soumis à l'expertise d'un opérateur humain.

En usage, les temps d'inférence pour un dactylogramme fourni à une méthode selon le présent exemple sont de l'ordre de la milliseconde pour un réseau convolutif de 1600 octets à 400000 paramètres stockés sur 32 bits exécuté sur un CPU Intel® Core™ i7-7700.

**Références**

Littérature brevet

**EP 4 586 213 A1**

US 5572597 A1, LORAL CORP [US], 05.11.1996.

EP 0 779 595 A2, NEC CORP [JP], 18.06.1997.

US 5 825 907 A1, LUCENT TECHNOLOGIES INC [US], 20.10.1998.

US 2012 014569 A1, IB KOREA LTD [KR], 19.01.2012.

US 9 530 042 B1, UNIV KING SAUD [SA], 27.12.2016.

US 2017 046554 A1, NEC CORP [JP], 16.02.2017.

EP 3 825 915 A1, IDEMIA IDENTITY & SECURITY FRANCE [FR], 26.05.2021.

**Littérature non-brevet**

F. Galton, Fingerprint Directories. London, MacMillan & Co, 1895.

Henry Faulds, Guide to fingerprint Identification, Tokyo, Hanley, 1905.

E. Henry, Classification and uses of finger prints, published by his majesty's stationery office, London, 1913.

Wang et al., Fingerprint Classification Based on Depth Neural Network, arXiv preprint arXiv:1409.5188, 2014.

Michelsanti et al., Fast Fingerprint Classification with Deep Neural Networks, VISIGRAPP 2017.

## Revendications

1. Méthode (3000), mise en oeuvre par ordinateur, de classification de dactylogrammes parmi une pluralité de classes $C\_j$ d'appartenance dont chacune des classes correspond à une zone anatomique particulière $Z\_i$ de la face palmaire d'une main, ladite méthode (2000) prend, en tant que données d'entrée (I3000), au moins un dactylogramme D, et fournit, en tant que données de sortie (O3000), une classe C d'appartenance ou une liste L de classes $C\_k$ d'appartenance du dactylogramme D parmi la pluralité de classes $C\_j$ d'appartenance, ladite méthode (3000) comprend les étapes suivantes :

   - fournir (3001) un réseau convolutif CNN de neurones artificiels, ledit réseau convolutif CNN étant préalablement entrainé sur un ensemble E de données d'entrainement composé d'une pluralité de dactylogrammes $D\_i$ classés selon une pluralité de classes $C\_j$ dont chacune des classes correspond à une zone anatomique particulière d'une main, ledit réseau de convolutif CNN étant configuré pour fournir les probabilités d'appartenance $P\_j$ de chaque dactylogramme $D\_i$ de l'ensemble E à chacune des classes de la pluralité de classes $C\_j$ d'appartenance ;
   - inférer (3002), à l'aide du réseau neurone convolutif CNN entrainé, les probabilités d'appartenance $P\_i$ du dactylogramme D fourni en tant que données d'entrée (I3000) à chacune des classes de la pluralité de classes $C\_j$ d'appartenance ;
   - sélectionner (3003) une classe C d'appartenance parmi les classes $C\_j$ d'appartenance pour laquelle la probabilité d'appartenance P du dactylogramme D fourni en tant que données d'entrée (I3000) est la plus élevée parmi les probabilités $P\_i$ d'appartenance inférées pour desdites classes $C\_j$, ou une liste L d'un nombre k de classes d'appartenance $C\_k$ sélectionnées parmi la pluralité de classes $C\_j$ d'appartenance et triées selon un ordre croissant ou décroissant des probabilité $P\_k$ d'appartenance auxdites classes $C\_k$ inférées pour le dactylogramme D fourni en tant que données d'entrée (I3000).

2. Méthode (3000) selon la revendication 1, telle que les classes de la pluralité de classes d'appartenance sont sélectionnées parmi la main droite complète (C1), la main gauche complète (C2), une zone inférieure de la paume de la main droite (C3), une zone inférieure de la paume de la main gauche (C4), une zone supérieure de la main droite (C5), une zone supérieure de la main gauche (C6), la paume droite de l'écrivain (C7), la paume gauche de l'écrivain (C8), au moins deux, de préférence trois, de préférence quatre doigts de la main droite (C9), au moins deux, de préférence trois, de préférence quatre doigts de la main gauche (C10), les pouces de la main droite et de la main gauche (C11).

3. Méthode (3000) selon l'un quelconque des revendications 1 à 2, telle que le réseau convolutif CNN de neurones artificiels comprend :

- une première séquence S1 de couches convolutives de neurones artificiels ;
- une deuxième séquence S2 de blocs convolutifs résiduels de neurones artificiels ;
- une troisième séquence S3 comprenant au moins une couche de neurones artificiels entièrement connectés.

4. Méthode (3000) selon la revendication 3, telle que le réseau convolutif CNN de neurones artificiels comprend en outre, entre la première séquence S1 et la deuxième séquence S2, une étape de rééchantillonnage spatial, de préférence par interpolation bilinéaire.

5. Méthode (3000) selon l'une quelconque des revendications 1 à 4, telle que la fonction de coût utilisée lors de l'entrainement du réseau convolutif CNN de neurones artificiels comprend une fonction de coût de type entropie croisée.

6. Méthode (3000) selon l'une quelconque des revendications 1 à 5, telle que la fonction de coût utilisée lors de l'entrainement du réseau convolutif CNN de neurones artificiels comprend une fonction de sensibilité à la symétrie axiale.

7. Méthode (3000) selon l'une quelconque des revendications 1 à 6, telle que le réseau convolutif CNN de neurones artificiels, est entrainé à l'aide d'une pluralité d'ensembles de dactylogrammes d'entraînement, chaque ensemble comprenant des dactylogrammes de dimension identique.

8. Méthode (3000) selon la revendication 7, telle que le réseau convolutif CNN de neurones artificiels est entrainé sur des ensembles de dactylogrammes d'entrainement ayant été préalablement augmentés par des dactylogrammes sélectionnés dans lesdits ensembles à une ou plusieurs fréquences préalablement définies, lesdits dactylogrammes sélectionnés ayant fait l'objet d'une opération d'amputation et/ou de transformation par symétrie axiale.

9. Dispositif (5000) de traitement de données comprenant des moyens de mettre en oeuvre une méthode (3000) selon l'une quelconque des revendications 1 à 8.

10. Programme d'ordinateur (I5003) comprenant des instructions qui, lorsque le programme est exécuté par un ordinateur, conduisent celui-ci à mettre en oeuvre une méthode (3000) selon l'une quelconque des revendications 1 à 8.

11. Support lisible (5003) par ordinateur comprenant des instructions qui, lorsqu'elles sont exécutées par un ordinateur, conduisent celui-ci à mettre en oeuvre une méthode (3000) selon l'une quelconque des revendications 1 à 8.

12. Système de classification de dactylogrammes parmi une pluralité de classes $C\_j$ d'appartenance dont chacune des classes correspond à une zone anatomique particulière $Z\_i$ de la face palmaire d'une main, ledit système comprend :

- un dispositif (1000) d'acquisition de dactylogrammes ;
- un dispositif (5000) de traitement de données selon la revendication 9, ledit dispositif (5000) de traitement de données est en outre configuré pour recevoir et traiter des dactylogrammes acquis par le dispositif (1000) d'acquisition de dactylogrammes.

13. Système selon la revendication 12, tel que le dispositif (5000) de traitement de données est outre configuré pour émettre un signal avertissement lorsqu'un dactylogramme acquis par le dispositif d'acquisition n'est pas conforme à la classe attendue pour ledit dactylogramme et/ou est attribué à une classe non conforme par un opérateur du système.

14. Utilisation d'une méthode selon l'un quelconque des revendications 1 à 8 pour vérifier l'intégrité d'une base de données de dactylogrammes de classes différentes.

[Fig. 1]

Fig. 1

[Fig. 2]

C1    C2    C3    C4    C5    C6

C7    C8    C9    C10    C11

Fig. 2

[Fig. 3]

3000

D

I3000

3001 ← CNN

D → 3002 ← E={Di,{Cj}i}

3002 → {Cj, Pj}

{Cj, Pj} → 3003

3003 → C, L    O3000

**Fig. 3**

[Fig. 4]

S1                    S2              S3

k=5, n=8, s=4, p=2 → k=3, n=16, s=2, p=1 → k=3, n=32, s=2, p=1 → k=3, n=96, s=2, p=1 → Res Block → Res Block → Res Block → FC (11)

SB1              SB2

k=3, n=96, s=1, p=1 → BN → ReLu → k=3, n=96, s=1, p=1 → BN → ⊕ → ReLu

**Fig. 4**

[Fig. 5]

5000

Fig. 5

[Fig. 6]

Fig. 6

Europäisches
Patentamt

European
Patent Office

Office européen
des brevets

## RAPPORT DE RECHERCHE EUROPEENNE

**Numéro de la demande**

EP 24 19 9926

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BEANBONYKA RIM: "Fingerprint classification using deep learning approach", MULTIMEDIA TOOLS AND APPLICATIONS. , vol. 80, no. 28-29 14 juillet 2020 (2020-07-14), pages 35809-35825, XP093163120, US ISSN: 1380-7501, DOI: 10.1007/s11042-020-09314-6 Extrait de l'Internet: URL:https://link.springer.com/content/pdf/10.1007/s11042-020-09314-6.pdf * abrégé * * figures 5, 6, 11 * * section 1 * * section 2 * * section 3.5 * * section 4.2 * * section 5.3 * * section 6 * ----- | 1-14 | INV. G06V10/764 G06V10/82 G06V40/12 G06V40/10 |

**DOMAINES TECHNIQUES RECHERCHES (IPC)**

G06V

Le présent rapport a été établi pour toutes les revendications

| Lieu de la recherche | Date d'achèvement de la recherche | Examinateur |
|---|---|---|
| La Haye | 10 janvier 2025 | Martinez, Francis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                 
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012014569 A1
- US 2017046554 A1
- US 5572597 A1
- EP 0779595 A2
- US 5825907 A1
- US 9530042 B1
- EP 3825915 A1

**Littérature non-brevet citée dans la description**

- **WANG et al.** Fingerprint Classification Based on Depth Neural Network. *arXiv:1409.5188*, 2014
- **MICHELSANTI et al.** Fast Fingerprint Classification with Deep Neural Networks. *VISIGRAPP*, 2017
- **F. GALTON**. Fingerprint Directories. MacMillan & Co, 1895
- **HENRY FAULDS**. Guide to fingerprint Identification. Hanley, 1905
- **E. HENRY**. Classification and uses of finger prints. majesty's stationery office, 1913